# NEUE EUROPÄISCHE PATENTSCHRIFT

(11) **EP 0 707 608 B2**
(45) Veröffentlichungstag und Bekanntmachung des Hinweises auf die Entscheidung über den Einspruch: **13.02.2002**
(45) Hinweis auf die Patenterteilung: 25.02.1998
(21) Anmeldenummer: 94918882.5
(22) Anmeldetag: 18.06.1994
(51) Int. Cl.: C08G 18/62, C08G 18/08

(54) **WÄSSRIGES ZWEIKOMPONENTEN-POLYURETHAN-BESCHICHTUNGSMITTEL, VERFAHREN ZU SEINER HERSTELLUNG UND SEINE VERWENDUNG IN VERFAHREN ZUR HERSTELLUNG EINER MEHRSCHICHTLACKIERUNG**
AQUEOUS TWO-COMPONENT POLYURETHANE COATING AGENT, PROCESS FOR PREPARING THE SAME AND ITS USE IN A PROCESS FOR APPLYING A MULTILAYERED COATING OF LACQUER
ENDUIT AQUEUX A BASE DE POLYURETHANNE A DEUX COMPOSANTS, SON PROCEDE DE PRODUCTION ET SON UTILISATION DANS DES PROCEDES D'APPLICATION D'UNE LAQUE EN COUCHES MULTIPLES

(30) Priorität: 03.07.1993 DE 4322242
(43) Veröffentlichungstag der Anmeldung: 24.04.1996
(73) Patentinhaber: BASF Coatings Aktiengesellschaft, 48165 Münster (DE)
(72) Erfinder: NIENHAUS, Egbert, D-59387 Ascheberg (DE); MAYER, Bernd, D-48165 Münster (DE); MEISENBURG, Uwe, D-47053 Duisburg (DE)
(74) Vertreter: Fitzner, Ulrich, Dr.
(86) Internationale Anmeldenummer: EP9401991
(87) Internationale Veröffentlichungsnummer: WO9502005

(56) Entgegenhaltungen:
- EP-A- 0 358 979
- EP-A- 0 408 858
- WO-A-90/00570
- DE-A- 2 054 239
- DE-A- 2 603 259
- DE-A- 2 709 782
- DE-A- 2 709 784
- DE-A- 2 759 234
- DE-A- 2 814 128
- DE-A- 2 851 615
- DE-A- 2 851 616
- DE-A- 4 100 430
- DE-A- 4 132 430
- DE-C- 2 618 809
- DE-C- 2 858 097
- DE-C- 2 858 105
- FR-A- 2 295 048

## Beschreibung

Gegenstand der vorliegenden Erfindung ist ein wäßriges Zweikomponenten-Polyurethan-Beschichtungsmittel, enthaltend
A) ein wasserverdünnbares, Hydroxyl- und Carboxylatgruppen aufweisendes Polyacrylatharz (A) mit einer OH-Zahl von 40 bis 200 mg KOH/g, einer Säurezahl von 20 bis 100 mg KOH/g und einer Glasübergangstemperatur von -40°C bis +60°C und
B) eine Polyisocyanatkomponente (B) als Vernetzungsmittel.

Gegenstand der vorliegenden Erfindung ist außerdem ein Verfahren zur Herstellung dieser wäßrigen Beschichtungsmittel sowie ihre Verwendung in Verfahren zur Herstellung einer Mehrschichtlackierung sowie beschichtete Gegenstände, bei denen mindestens eine Lackschicht unter Verwendung dieser Beschichtungsmittel hergestellt wurde.

Die Lackindustrie ist aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lacken. Dies gilt sowohl für den Bereich der Automobilserienlackierung als auch für den Bereich der Autoreparaturlackierung. Wäßrige Beschichtungsmittel kommen dabei insbesondere im Bereich der Decklacke zum Einsatz. Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht.

Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonst wie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden. Femer müssen die Deckbeschichtungszusammensetzungen mit Hilfe von automatischen Lackieranlagen durch Spritzen applizierbar sein. Dazu müssen sie bei Spritzviskosität einen so hohen Feststoffgehalt aufweisen, daß mit 1 bis 2 Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand und hohe Härte) sowie eine gute Witterungsbeständigkeit zeigen.
Im Bereich der Autoreparaturlackierung besteht außerdem noch die Forderung, daß die eingesetzten Beschichtungsmittel bei niedrigen Temperaturen (im allgemeinen ≲ 80°C) aushärtbar sind und auch bei Aushärtung bei diesen niedrigen Temperaturen zu Filmen mit den geforderten guten mechanischen Eigenschaften führen.

Aus der EP-B-358 979 sind wäßrige Zweikomponenten-Polyurethanbeschichtungsmittel bekannt, die ein hydroxylgruppenhaltiges Polyacrylatharz sowie eine Polyisocyanatkomponente enthalten. Diese in der EP-B-358 979 beschriebenen Lacke zeigen allerdings hinsichtlich der Witterungsbeständigkeit, insbesondere hinsichtlich der Beständigkeit im Schwitzwasserkonstantklima (40°C, 240 h), und Verarbeitbarkeit (Viskositätsabfall und zu kurze Topfzeit) große Nachteile.

Ferner sind aus der DE-OS-41 32 430 wäßrige Lacke und ihre Verwendung in Automobildecklackierungen bekannt. Diese wäßrigen Lacke enthalten ein wasserverdünnbares Polyacrylatharz und als Vernetzungsmittel ein blockiertes Polyisocyanat. Der Einsatz von blockierten Polyisocyanaten erfordert allerdings im allgemeinen die Anwendung erhöhter Einbrenntemperaturen, wodurch diese wäßrigen Lacke für den Bereich der Reparaturlackierung weniger geeignet sind, sondern hauptsächlich im Bereich der Serienlackierung eingesetzt werden.

Ferner ist aus der DE-OS 40 09 000 ein Verfahren zur Herstellung einer mehrschichtigen Reparaturlackierung bekannt, bei dem ein wäßriger Decklack auf Basis eines wasserverdünnbaren oder wasserdispergierbaren Emulsionspolymerisats eingesetzt wird. Das dort beschriebene wasserverdünnbare Bindemittel wird jedoch nur im physikalisch trocknenden Basislack eingesetzt.

Schließlich sind aus der EP-A-516 277 wäßrige Zweikomponenten-Polyurethanlacke bekannt, die als erfindungswesentliche Komponente ein Polyether-modifiziertes Polyisocyanat enthalten. Als Bindemittel enthalten diese wäßrigen Zweikomponentenlacke üblicherweise eingesetzte Polyacrylatharze. Die Verwendung der Polyether-modifizierten Polyisocyanate weist jedoch den Nachteil auf, daß die erhaltenen Beschichtungen nur eine geringe Witterungsbeständigkeit, vor allem schlechte Ergebnisse im Schwitzwasser-Konstantklimatest, zeigen.

Der vorliegenden Erfindung liegt somit die Aufgabe zugrunde, wäßrige Zweikomponenten-Polyurethan-Beschichtungsmittel auf der Basis von hydroxylgruppenhaltigen Polyacrylatharzen und Polyisocyanaten zur Verfügung zu stellen, die gegenüber den bekannten wäßrigen Zweikomponenten-Polyurethan-Beschichtungsmittel verbesserte Eigenschaften aufweisen und/oder verbesserte Lackfilme liefern. Die neuen Lacke sollten vor allem eine sichere Verarbeitung mit längerer Topfzeit gewährleisten, d.h. möglichst lange Zeit im gebrauchsfertigen Zustand verarbeitbar sein. Weiterhin sollten die neuen Lacke für den Bereich der Automobilreparaturlackierung geeignet sein, d.h. bei niedrigen Temperaturen (i. a. ≲ 80°C) aushärtbar sein und zu Beschichtungen führen, die die Anforderungen, die üblicherweise an einen Autoreparaturlack gestellt werden, zumindest erfüllen: Die Überzugsmittel sollten daher beispielsweise einen guten Verlauf, gute mechanische Eigenschaften und insbesondere eine gute Witterungsbeständigkeit aufweisen.

Diese Aufgabe wurde überraschenderweise durch wäßrige Zweikomponenten-Polyurethan-Beschichtungsmittel der eingangs genannten Art gelöst, die dadurch gekennzeichnet sind, daß das wasserverdünnbare Acrylatharz (A) erhältlich ist, indem in einem organischen Lösemittel oder Lösemittelgemisch und in Gegenwart mindestens eines Polymerisationsinitiators
(a1) ein von (a2), (a3), (a4) und (a6) verschiedener, mit (a2), (a3), (a4), (a5) und (a6) copolymerisierbarer, im wesentlichen carboxylgruppenfreier (Meth)acrylsäureester oder ein Gemisch aus solchen Monomeren,
(a2) ein mit (a1), (a2), (a3), (a4), (a5) und (a6) copolymerisierbares, von (a4) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(a3) ein oder mehrere Vinylester, von in α-Stellung verzweigten Monocarbonsäuren mit 5 bis 18 C-Atomen je Molekül und/oder
(a4) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird,
(a5) ein mindestens eine Carboxylgruppe pro Molekül tragendes, mit (a1), (a2), (a3), (a4), und (a6) copolymerisierbares, ethylenisch ungesättigtes Monomer oder ein Gemisch aus solchen Monomeren und (a6) eine Kombination von einem oder mehreren mit (a1), (a2), (a3), (a4) und (a5) copolymerisierbaren Polysiloxanmakromonomeren und mit (a1), (a2), (a3), (a4) und (a5) copolymerisierbaren, von (a1), (a2), (a3) und (a4) verschiedenen, im wesentlichen carboxylgruppenfreien, ethylenisch ungesättigten Monomeren oder eine Kombination von einem oder mehreren mit (a1), (a2), (a3), (a4) und (a5) copolymerisierbaren Polysiloxanmakromonomeren und einem Gemisch aus mit (a1), (a2), (a3), (a4) und (a5) copolymerisierbaren, von (a1), (a2), (a3) und (a4) verschiedenen, im wesentlichen carboxylgruppenfreien, ethylenisch ungesättigten Monomeren
polymerisiert werden und nach Beendigung der Polymerisation das erhaltene Polyacrylatharz zumindest teilweise neutralisiert und in Wasser dispergiert wird, wobei (a1), (a2), (a3), (a4), (a5) und (a6) in Art und Menge so ausgewählt werden, daß das Polyacrylatharz (A) die gewünschte OH-Zahl, Säurezahl und Glasübergangstemperatur aufweist.

Gegenstand der vorliegenden Erfindung ist außerdem ein Verfahren zur Herstellung der wäßrigen Zweikomponenten-Polyurethan-Beschichtungsmittel, bei dem kurz vor der Applikation das isocyanatgruppenhaltige Vernetzungsmittel und die das wasserverdünnbare Polyacrylatharz enthaltende Komponente gemischt werden. Eerner betrifft die Erfindung ein Verfahren zur Herstellung eines mehrschichtigen, schützenden und/oder dekorativen überzugs auf einer Substratobeffläche, bei dem als Deckbeschichtungszusammensetzung die erfindungsgemäßen wäßrigen Beschichtungsmittel eingesetzt werden, sowie die nach diesem Verfahren erhaltenen beschichteten Gegenstände. Gegenstand der vofliegenden Erfindung ist schließlich auch die Verwendung der wäßrigen Beschichtungsmittel sowie die Verwendung der erfindungsgemäßen wasserverdünnbaren Polyacrylatharze in wäßrigen Beschichtungsmitteln.

Es ist überraschend und war nicht vorhersehbar, daß durch die Verwendung der erfindungsgemäßen Polyacrylatharze (A) wäßrige Zweikomponenten-Polyurethanlacke erhalten werden, die eine sichere Verarbeitung mit längerer Topfzeit gewährleisten, d.h. die eine lange Zeit im gebrauchsfertigen Zustand verarbeitbar sind. Vorteilhaft ist ferner, daß die erfindungsgemäßen Beschichtungsmittel einen guten Verlauf zeigen sowie zu Beschichtungen mit guten mechanischen Eigenschaften, insbesondere einer guten Witterungsbeständigkeit und guten Beständigkeiten im Schwitzwasser-Konstantklimatest, führen.

Im folgenden werden nun zunächst die einzelnen Komponenten des erfindungsgemäßen wäßrigen Beschichtungsmittels näher erläutert. Bevor die Herstellung der erfindungsgemäß einzusetzenden Polyacrylatharze näher beschrieben wird, werden zwei Begriffserklärungen vorausgeschickt:
1. Als Abkürzung für "Methacrylsäure oder Acrylsäure" wird gelegentlich (Meth)acrylsäure verwendet.
2. Die Formulierung "im wesentlichen carboxylgruppenfrei" soll ausdrücken, daß die Komponenten (a1), (a2), (a3), (a4) und (a6) einen geringen Carboxylgruppengehalt (höchstens aber soviel, daß ein aus diesen Komponenten hergestellten Polyacrylatharz eine Säurezahl von höchstens 10 mg KOH/g hat) aufweisen können. Es ist aber bevorzugt, daß der Carboxylgruppengehalt der Komponenten (a1), (a2), (a3), (a4) und (a6) so niedrig wie möglich gehalten wird. Besonders bevorzugt werden carboxylgruppenfreie (a1), (a2), (a3), (a4) und (a6) Komponenten eingsetzt.

Zur Herstellung der erfindungsgemäß einzusetzenden Polyacrylatharze kann als Komponente (a1) jeder mit (a2), (a3), (a4), (a5) und (a6) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexylmethacrylat, genannt. Bevorzugt werden Gemische aus Alkylacrylaten und/oder Alkylmethacrylaten als (a1)-Komponente eingesetzt, die zu mindestens 20 Gew. -% aus n-Butyl- und/oder t-Butylacrylat und/oder n-Butyl- und/oder t-Butylmethacrylat bestehen.

Als Komponente (a1) können auch Ethyltriglykol(meth)acrylat und Methoxioligoglykol(meth)acrylat mit einem zahlenmittleren Molekulargewicht von vorzugsweise 550 oder andere ethoxilierte und/oder propoxilierte hydroxylgruppenfreie (Meth)acrylsäurederivate eingesetzt werden.

Als Komponente (a2) können mit (a1), (a2), (a3), (a4), (a5) und (a6) copolymerisierbare und von (a4) verschiedene, ethylenisch ungesättigte Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxialkylester der Acrylsäure, Methacrylsäure oder einer anderen α,β-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxialkylester der Acrylsäure oder Methacrylsäure, in denen die Hydroxialkylgruppe bis zu 20 Kohlenstoffatome enthält, Umsetzungsprodukte aus cyclischen Estern, wie z.B. ε-Caprolacton und diesen Hydroxialkylestern, oder Mischungen aus diesen Hydroxialkylestem bzw. ε-Caprolacton-modifizierten Hydroxialkylestern eingesetzt.

Als Beispiele für derartige Hydroxialkylester werden 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat, 4-Hydroxibutylmethacrylat, Hydroxistearylacrylat und Hydroxistearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.
Femer können als Komponente (a2) auch olefinisch ungesättigte Polyole eingesetzt werden. Bevorzugte Polyacrylatharze (A) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) werden ein oder mehrere Vinylester von in α-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit- Vinylester von gesättigten aliphatischen Monocarbonsäuren mit 9 bis 11 C-Atomen, die am α-C-Atom verzweigt sind, eingesetzt.

Als Komponente (a4) wird das Umsetzungsprodukt aus Acrylsäure und/oder Methacrylsäure mit dem Glycidylester einer in α-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären α-Kohlenstoffatom kann vorher, während oder nach der Polymerisationsreaktion erfolgen. Bevorzugt wird als Komponente (a4) das Umsetzungsprodukt von Acryl- und der Methacrylsäure mit dem Glycidylester der Versaticsäure eingesetzt. Dieser Glycidylester ist unter dem Namen "Cardura E10" im Handel erhältlich.

Als Komponente (a5) kann jedes mindestens eine Carboxylgruppe pro Molekül tragende mit (a1), (a2), (a3), (a4) und (a6) copolymerisierbare, ethylenisch ungesättigte Monomer oder ein Gemisch aus solchen Monomeren eingesetzt werden. Als Komponente (a5) werden vorzugsweise Acrylsäure und/oder Methacrylsäure eingesetzt. Es können aber auch andere ethylenisch ungesättigte Säuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Als Komponente (a5) können auch Maleinsäuremono(meth)acryloyloxiethylester, Bernsteinsäuremono(meth)acryloyloxiethylester und Phthalsäuremono(meth)acryloyloxiethylester eingesetzt werden.

Als erster Bestandteil der Komponente (a6) können alle mit (a1), (a2), (a3), (a4) und (a5) copolymerisierbaren, von (a1), (a2), (a3) und (a4) verschiedenen, im wesentlichen carboxylgruppenfreien ethylenisch ungesättigten Monomere oder Gemische aus solchen Monomeren eingesetzt werden. Als solche werden vorzugsweise vinylaromatische Kohlenwasserstoffe, wie Styrol, α-Alkylstyrol und Vinyltoluol, eingesetzt.
Als zweiter Bestandteil der Komponente (a6) werden in Kombination mit anderen als Komponente (a6) geeignet genannten Monomeren auch Polysiloxanmakromonomere eingesetzt. Geeignet sind Polysiloxanmakromonomere, die ein zahlenmittleres Molekulargewicht von 1.000 bis 40.000, bevorzugt von 2.000 bis 10.000, und im Mittel 0,5 bis 2,5, bevorzugt 0,5 bis 1,5, ethylenisch ungesättigte Doppelbindungen pro Molekül aufweisen. Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754, 014 in den Spalten 5 bis 9 beschriebenen Polysiloxanmakromonomere. Ferner sind auch andere Acryloxisilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxifunktioneller Silane mit Epichlorhydrin und anschließender Umsetzung des Reaktionsproduktes mit Methacrylsäure und/oder Hydroxialkylestern der (Meth)acrylsäure.

Bevorzugt werden in Komponente (a6) Polysiloxanmakromonomere der folgenden Formel eingesetzt: 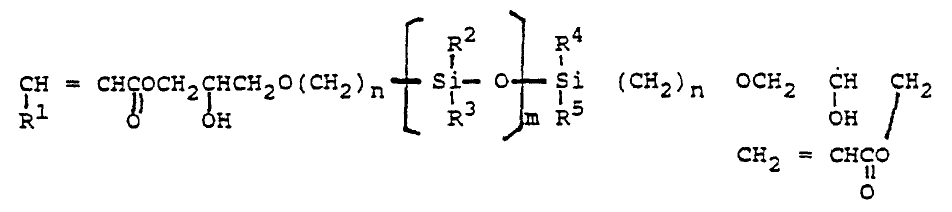 mit
- R¹ =: H oder CH₃
- R², R³, R⁴, R⁵ =: gleiche oder verschiedene aliphatische Kohlenwasserstoffreste mit 1 bis 8 C-Atomen, insbesondere Methyl, oder Phenylrest.
- n=: 2 bis 5, bevorzugt 3
- m=: 8 bis 30

Besonders bevorzugt wird das α,ω-acryloxiorganofunktionelle Polydimethylsiloxan der Formel 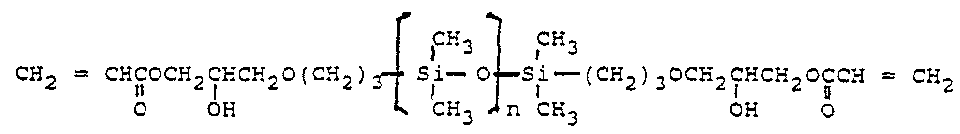 mit n = 9, einem Acryloxiäquivalent von 550 g pro Äquivalent, einer OH-Zahl von 102 mg KOH/g und einer Viskosität von 240 mPas (25°C) eingesetzt.

Bevorzugt werden in Komponente (a6) auch Polysiloxanmakromonomere eingesetzt, die hergestellt worden sind durch Umsetzung von 70 bis 99,999.Mol-% einer Verbindung (1), dargestellt durch die Formel (I) 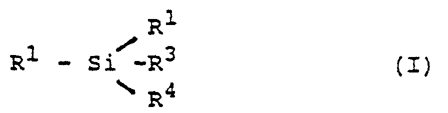 in welcher R¹ eine aliphatische Kohlenwasserstoffgruppe mit 1 bis 8 C-Atomen oder einen Phenylrest darstellt und R², R³ und R⁴ jeweils für einen Halogenrest oder einen Alkoxirest mit 1 bis 4 C-Atomen oder eine Hydroxylgruppe stehen, mit 30 bis 0,001 Mol-% einer Verbindung (2), dargestellt durch die Formel (II) 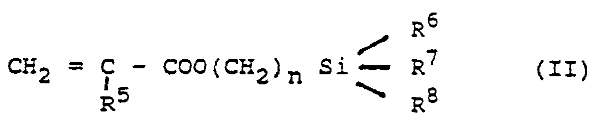 in welcher R⁵ ein Wasserstoffatom oder einen Methylrest darstellt, R⁶, R⁷ und R⁸ jeweils für Halogen, OH- oder einen Alkoxirest mit 1 bis 4 C-Atomen oder eine aliphatische Kohlenwasserstoffgruppe mit 1 bis 8 C-Atomen stehen, wobei wenigstens einer der Reste R⁶, R⁷ oder R⁸ OH- oder eine Alkoxigruppe ist und n eine ganze Zahl von 1 bis 6 darstellt.

Beispiele für geeignete Verbindungen (1) und (2) sind in der WO 92/22615 auf Seite 13, Zeile 18 bis Seite 15, Zeile 9, genannt.

Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxigruppen dieser Verbindungen zurückzuführen sind. in Abhängigkeit von den Reaktionsbedingungen beinhaltet die Umsetzung zusätzlich zu den Dehydratisierungsreaktion eine dealkohalisierende Kondensation. Falls die Verbindungen (1) oder (2) Halogenreste enthalten, wird die Reaktion zwischen (1) und (2) bewerkstelligt durch Dehydrohalogenierung.

Die Bedingungen, unter denen die Reaktion zwischen der Verbindung (1) und der Verbindung (2) durchgeführt wird, sind ebenfalls in der internationalen Patentanmeldung mit der internationalen Veröffentlichungsnummer WO 92/22615 auf der Seite 15, Zeile 23, bis Seite 18, Zeile 10, beschrieben.

Die Einsatzmenge des oder der Polysiloxanmakromonomeren in Komponente (a6) zur Modifizierung der Acrylatcopolymerisate (A) beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A) eingesetzten Monomeren.

Die Verwendung derartiger Polysiloxanmakromonomerer führt zu einer Verbesserung des Slips des wäßrigen Polyurethanbeschichtungsmittels.

Die Art und Menge der Komponenten (a1) bis (a6) wird so ausgewählt, daß das Polyacrylatharz (A) die gewünschte OH-Zahl, Säurezahl und Glasübergangstemperatur aufweist. Besonders bevorzugt eingesetzte Acrylatharze werden erhalten durch Polymerisation von
(a1) 20 bis 60 Gew.-%, bevorzugt 30 bis 50 Gew.-%, der Komponente (a1)
(a2) 10 bis 40 Gew.-%, bevorzugt 15 bis 35 Gew.-%, der Komponente (a2)
(a3) 1 bis 25 Gew.-%, bevorzugt 5 bis 15 Gew.-%, der Komponente (a3)
(a4) 1 bis 25 Gew.-%, bevorzugt 5 bis 15 Gew.-%, der Komponente (a4)
(a5) 1 bis 15 Gew.-%, bevorzugt 2 bis 8 Gew.-%, der Komponente (a5) und
(a6) 5 bis 30 Gew-%, bevorzugt 10 bis 20 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (A) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Hersteilung von wäßrigen Dispersionen geeigneten Lösemittel und Polymerisationsinitiatoren eingesetzt. Als Beispiele für brauchbare Lösemittel werden Butylglykol, 2-Methoxipropanol, n-Butanol, Methoxibutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxipropionsäureethylester und 3-Methyl-3-methoxibutanol sowie Derivate auf Basis von Propylenglykol, z.B. Ethylethoxipropionat, Methoxipropylacetat und ähnliche, genannt.
Als Beispiele für brauchbare Polymerisationsinitiatoren werden freie Radikale bildende Initiatoren, wie z.B. t-Butylperethylhexanoat, Benzoylperoxid, Azobisisobutyronitril und t-Butylperbenzoat genannt. Die Polymerisation wird zweckmäßigerweise bei einer Temperatur von 80 bis 160°C, vorzugsweise 110 bis 160°C, durchgeführt. Bevorzugt werden als Lösemittel Ethoxiethylpropionat und Butylacetat eingesetzt.

Bevorzugt wird das Polyacrylatharz (A) nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem
I. ein Gemisch aus (a1), (a2), (a3), (a4) und (a6) oder ein Gemisch aus Teilen der Komponenten (a1), (a2), (a3), (a4) und (a6) in einem organischen Lösemittel polymerisiert wird,
II. nachdem mindestens 60 Gew. -% des aus (a1), (a2), (a3), (a4) und ggf. (a6) bestehenden Gemisches zugegeben worden sind, (a5) und der gegebenenfalls vorhandene Rest der Komponenten (a1), (a2), (a3), (a4) und (a6) zugegeben werden und weiter polymerisiert wird und
III. nach Beendigung der Polymerisation das erhaltene Polyacrylatharz zumindest teilweise neutralisiert und in Wasser dispergiert wird.

Daneben ist es aber auch möglich, die Komponenten (a3) und/oder (a4) zusammen mit zumindest einem Teil des Lösemittels vorzulegen und die restlichen Komponenten zuzudosieren. Außerdem können auch die Komponenten (a3) und/oder (a4) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a3) und (a4) sowie ggf. Teilen der Komponenten (a1) und (a6) vorgelegt.
Bevorzugt ist außerdem die Herstellung der erfindungsgemäß eingesetzten Polyacrylatharze (A) durch ein Zweistufenverfahren, bei dem die Stufe (I) 1 bis 8 Stunden, vorzugsweise 1,5 bis 4 Stunden, dauert und die Zugabe der Mischung aus (a5) und dem ggf. vorhandenen Rest der Komponenten (a1), (a2), (a3), (a4) und (a6) innerhalb von 20 bis 120 Min., vorzugsweise innerhalb von 30 bis 90 Min., erfolgt. Nach Beendigung der Zugabe der Mischung aus (a5) und dem ggf. vorhandenen Rest der Komponenten (a1), (a2), (a3), (a4) und (a6) wird so lange weiter polymerisiert, bis alle eingesetzten Monomeren im wesentlichen vollständig umgesetzt worden sind.

Die Menge und Zugabegeschwindigkeit des Initiators wird vorzugsweise so gewählt, daß ein Polyacrylatharz (A) mit einem zahlenmittleren Molekulargewicht von 2500 bis 20.000 erhaiten wird. Es ist bevorzugt, die Initiatorzugabe zum gleichen Zeitpunkt wie die Zugabe der Monomeren zu beginnen und etwa eine halbe Stunde nachdem die Zugabe der Monomeren beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel 1 1/2 h) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann. Das erhaltene Polyacrylatharz (A) weist eine OH-Zahl von 40 bis 200, vorzugsweise 60 bis 140 mg KOH/g, eine Säurezahl von 20 bis 100 mg KOH/g, vorzugsweise 25 bis 50 mg KOH/g und eine Glasübergangstemperatur von -40 bis +60°C, vorzugsweise -20 bis +40°C, auf. Die Glasübergangstemperatur kann dabei nach folgender Formel berechnet werden: 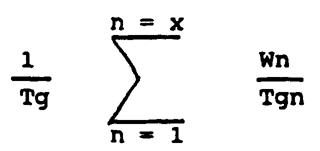
Tg = Glasübergangstemperatur des Polyacrylatharzes (A)
X = Anzahl der im Polyacrylatharz einpolymerisierten verschiedenen Monomere
Wn = Gewichtsanteil des n-ten Monomers
Tgn= Glasübergangstemperatur des Homopolymers aus dem n-ten Monomer

Für die Berechnung der Glasübergangstemperatur wird der Tg-Wert des Homopolymers des Umsetzungsproduktes aus Acrylsäure und Cardura E10 gleich der Glasübergangstemperatur des Homopolymers von Isodecylmethacrylat (-41°C) gesetzt.

Nach Beendigung der Polymerisation wird das erhaltene Polyacrylatharz teilweise neutralisiert und in Wasser dispergiert. Der jeweils einzustellende Neutralisationsgrad hängt von der Säurezahl des Acrylates ab und liegt im allgemeinen bei Säurezahlen <70 mg KOH/g zwischen 50 und 90 % und bei Säurezahlen > 70 mg KOH/g zwischen 30 und 80 %. Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin, Diethanolamin und Triethanolamin verwendet. Besonders bevorzugt werden tertiäre Amine als Neutralisationsmittel eingesetzt, insbesondere Dimethylethanolamin, Triethylamin, Dimethylisopropylamin, Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß die Deckbeschichtungszusammensetzung einen pH-Wert von 7 bis 8,5, vorzugsweise 7,2 bis 7,8, aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittlere Teilchengröße vorzugsweise zwischen 60 und 300 nm liegt (Meßmethode: Laserlichtstreuung, Meßgerät Malvern Autosizer 2 C). Das erfindungsgemäß eingesetzte Polyacrylatharz (A) wird in den Beschichtungsmitteln üblicherweise in einer Menge von 30 bis 50 Gew.-% (berechnet als Festkörper, d.h. ohne Wasseranteil), bezogen auf das Gesamtgewicht des Beschichtungsmittels, eingesetzt.

Bei der Polyisocyanatkomponente (B) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgrup- pen pro Molekül und mit Viskositäten von 200 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und ggf. die Viskosität des Polyisocyanates auf einen Wert innerhalb der obengenannten Bereiche abzusenken. Als Zusatzmittel geeignete Lösemittel für die Polyisocyanate sind beispielsweise Ethoxiethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-I-methylcyclohexan, 3-Isocyanatomethyl-3,5,5,-trimethylcyclohexylisocyanat(Isophorondiisoyanat"), 2,5-und 3,5-Bis(isocyanatomethyl)-8-methyl-1,4-methano-decahydronaphthaBin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4"-Triisocyanatotriphenylmethan. Es können auch Isocyanuratgruppen und/ oder Biuretgruppen und/oder Allophanatgruppen und/oder Urethangruppen und/oder Harnstoffgruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Zur Herstellung der gebrauchsfertigen, wäßrigen Zweikomponenten-Polyurethan-Beschichtungsmittel wird die Polyisocyanatkomponente (B) kurz vor der Applikation mit der Polyacrylatharzkomponente (A) vermischt. Die Durchmischung kann durch einfaches Verrühren bei Raumtemperatur, aber auch durch Dispergieren erfolgen. Die Polyisocyanatkomponente (B) wird dabei in solch einer Menge eingesetzt, daß das Gewichtsverhältnis zwischen Polyacrylatharzfeststoff und Polyisocyanatfeststoff 60:40 bis 90:10, besonders bevorzugt 70:30 bis 85:15, beträgt. Das Verhältnis der Anzahl der freien OH-Gruppen der Komponente (A) zur Anzahl der Isocyanatgruppen der Komponente (B) liegt dabei üblicherweise im Bereich von 1:2 bis 2:1.

Die erfindungsgemäßen wäßrigen Zweikomponenten-Polyurethanharz-Beschichtungsmittel können neben dem erfindungsgemäß eingesetzten Polyacrylatharz (A) auch noch vernetzte Polymermikroteilchen, wie sie zum Beispiel in der EP-A-38 127 offenbart sind, und/oder weitere verträgliche Harze, wie z.B. wasserverdünnbare oder wasserlösliche Polyacrylatharze, Polyurethanharze, Polyesterharze, Alkydharze oder Epoxidharzester enthalten. Der Anteil dieser weiteren Harze liegt üblicherweise zwischen 1 und 10 Gew.-%, bezogen auf das Gesamtgewicht des Beschichtungsmittels.
So können den erfindungsgemäßen Beschichtungsmitteln beispielsweise bis zu 30 Gew.-%, bezogen auf den Bindemittelfestkörper des Polyacrylatharzes (A), eines mittels Emulsionspolymerisation hergestellten Acrylates mit einer OH-Zahl, die bevorzugt zwischen 40 und 200 mg KOH/g liegt, zugesetzt werden. Die Herstellung deartiger Emulsionspolymere ist beispielsweise in der DE-OS 40 09 000 beschrieben, wobei allerdings die OH-Zahl der Acrylate entsprechend zu erhöhen ist.

Darüber hinaus können die erfindungsgemäßen Beschichtungsmittel auch noch übliche Hilfs- und Zusatzstoffe, wie insbesondere Verdicker und Netzmittel, enthalten. Bevorzugt wird in den erfindungsgemäßen wäßrigen Beschichtungsmitteln ein nichtionisches Polyurethanverdickungsmittel zugesetzt, da dies zu einer besseren Transparenz und besseren Emulgierbarkeit des Polyisocyanates führt. Bevorzugt wird in den erfindungsgemäßen wäßrigen Beschichtungsmitteln außerdem ein Netzmittel auf Basis eines alkylmodifizierten Polyethers zugesetzt, da dies ebenfalls die Transparenz des Beschichtungsmittels sowie Glanz und Verlauf des Beschichtungsmittels verbessert.
Darüber hinaus können die wäßrigen Beschichtungsmittel noch weitere übliche Hilfs- und Zusatzstoffe, wie beispielsweise Entschäumungsmittel und ähnliches, enthalten. Die Einsatzmenge Hilfs- und Zusatzstoffe (einschl. Netzmittel und Verdickungsmittel) beträgt üblicherweise zwischen 1 und 5 Gew.-%, bezogen auf das Gesamtgewicht der Beschichtungsmittel.

Die erfindungsgemäßen wäßrigen Beschichtungsmittel können auch übliche organische Lösemittel enthalten. Deren Anteil wird möglichst gering gehalten. Er liegt üblicherweise unter 15 Gew.-%, bezogen auf den Gesamtgehalt an flüchtigen Bestandteilen.

Die erfindungsgemäßen Lacke werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin, eingestellt werden.

Die erfindungsgemäßen Lacke können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden. Die erfindungsgemäßen Lacke werden vorzugsweise zur Herstellung von Decklackierungen eingesetzt. Die erfindungsgemäßen Lakke können sowohl bei der Serien- als auch bei der Reparaturlackierung von Automobilkarosserien eingesetzt werden. Sie werden vorzugsweise aber im Bereich der Reparaturlackierung eingesetzt. Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base coat- /Clear coat-Verfahren). Bevorzugt werden die erfindungsgemäßen Lacke aber als Klarlacke eingesetzt.

Wenn die erfindungsgemäßen Lacke zur Herstellung von einschichtigen Decklackierungen oder als Basislacke eingesetzt werden, dann können sie mit Pigmenten, wie z.B. Pigmenten auf anorganischer Basis, z.B. Titandioxid, Eisenoxid, Ruß usw. und/oder Pigmenten auf organischer Basis und/oder Metallpigmenten, wie z.B. Aluminiumbronzen und/oder Perlglanz- bzw. Interferenzpigmenten, pigmentiert werden. Aluminiumbronzen und Perlglanz- bzw Interferenzpigmente sind Beispiele für Effektpigmente. Wenn die erfindungsgemäßen Beschichtungsmittel als pigmentierte Basislacke eingesetzt werden, dann können sie mit den erfindungsgemäßen Lacken, die keine Pigmente enthalten oder nur transparent pigmentiert sind, überlackiert werden, sie können aber auch mit konventionellen Klarlacken auf Basis organischer Lösemittel, mit wäßrigen Klarlacken oder auch Pulverklarlacken überlackiert werden.
Die erfindungsgemäßen Deckbeschichtungszusammensetzungen
- weisen bei Spritzviskosität einen so hohen Feststoffgehalt (20 bis 50 Gew.-%, vorzugsweise 32 bis 45 Gew.-%) auf, daß mit 1 bis 2 Spritzgängen (Kreuzgänge) Lackfilme mit ausreichender Schichtdicke (die Dicke des eingebrannten Lackfilms sollte vorzugsweise zwischen 25 und 70 µm liegen) erhalten werden und
- liefern Lackfilme mit einem sehr guten Aussehen (guter Verlauf, hoher Glanz, guter Decklackstand), guter Witterungsbeständigkeit und guten mechanischen Eigenschaften und
- weisen einen verhältnismäßig niedrigen Anteil an organischen Cosolventien (weniger als 35 Gew-%, bezogen auf den Gesamtfeststoffgehalt an Bindemitteln und Vernetzungsmitteln) auf.

Wenn die erfindungsgemäßen Deckbeschichtungszusammensetzungen zusammen mit wasserverdünnbaren Basisbeschichtungszusammensetzungen zur Herstellung von Metalleffektlackierungen verwendet werden, dann werden Metalleffektlackierungen erhalten, in denen die transparente Deckschicht besonders gut auf der Basisschicht haftet. Geeignete Basislacke sind beispielsweise die in der DE-OS 40 09 000 beschriebenen wäßrigen Basislacke. Geeignet sind ferner alle üblicherweise eingesetzten wäßrigen Basislacke.

## Patentansprüche

1. Wäßriges Zweikomponenten-Polyurethan-Beschichtungsmittel, enthaltend
A) ein wasserverdünnbares. Hydroxyl- und Carboxylatgruppen aufwersendes Polyacrylatharz (A) mit einer OH-Zahl von 40 bis 200 mg KOH/g, einer Säurezahl von 20 bis 100 mg KOH/g und einer Glasübergangstemperatur von -40°C bis -60°C und
B) eine Polyisocyanatkomponente (B) als Vemetzungsmittel.
**dadurch gekennzeichnet. daß** das wasserverdünnbare Polyacrylatharz (A) erhältlich ist. indem in einem organischen Lösemittel oder Lösemittelgemisch und in Gegenwart mindestens eines Polymerisationsinitiators
a1) ein von (a2), (a3), (a4) und (a6) verschiedener, mit (a2), (a3), (a4), (a5) und (a6) copolymerisierbarer, im wesentlichen carboxylgruppenfreier (Meth)acrylsäureester oder ein Gemisch aus solchen Monomeren.
a2) ein mit (a1), (a2), (a3), (a4), (a5) und (a6) copolymerisierbares, von (a4) verschiedenes, ethylenisch ungesättigtes Monomer. das mindestens eine Hydroxylgruppe pro Molekül trägt und im wesentlichen carboxylgruppenfrei ist. oder ein Gemisch aus solchen Monomeren,
a3) ein oder mehrere Vinylester von in α-Stellung verzweigten Monocarbonsäuren mit 5 bis 18 C-Atomen je Molekül und/oder
a4) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgesetzt wird.
a5) ein mindestens eine Carboxylgruppe pro Molekül tragendes, mit (a1), (a2), (a3), (a4), und (a6) copolymerisierbares, ethylenisch ungesättigtes Monomer oder ein Gemisch aus solchen Monomeren und
a6) eine Kombination von einem oder mebrerert mit (a1), (a2), (a3), (a4) und (a5) copolymerisierbaren Polysiloxanmakromonomeren und mit (a1), (a2), (a3), (a4) und (a5) copolymerisierbaren, von (a1), (a2), (a3) und (a4) verschiedenen. im wesentlichen carboxylgruppenfreien. ethylenisch ungesättigten Monomeren oder eine Kombination von einem oder mehreren mit (a1), (a2), (a3), (a4) und (a5) copolymerisierbaren Polysiloxanmakromonomeren und einem Gemisch aus mit (a1), (a2), (a3), (a4) und (a5) copolymerisierbaren. von (a1), (a2), (a3) und (a4) verschiedenen, im wesemlichen carboxylgruppenfreien, ethylenisch ungesättigten Monomeren
polymerisiert werden und nach Beendigung der Polymerisation das erhaltene Polyacrylatharz zumindest teilweise neutralisiert und in Wasser dispergiert wird wobei (a1), (a2), (a3), (a4), (a5) und (a6) in Art und Menge so ausgewählt werden, daß das Polyacrylatharz (A) die gewünschte OH-Zahl, Säurezahl und Glasübergangstemperatur aufweist.

2. Wäßrigas Beschichtungsmittel nach Anspruch 1, **dadurch gekennzeichnet, daß** cas wasserverdünnbare Polyacrylatharz (A) eine OH-Zahl von 60 bis 140 mg KOH/g und/oder eine Säurezahl von 25 bis 50 mg KOH/g und/oder eine Glasübergangstemperatur von -20°C bis +40°C aufweist.

3. Wäßriges Beschichtungsmittel nach Anspruch 1 oder 2. **dadurch gekennzeichnet**, caß das wasserverdünnbare Polyacrylatharz (A) erhältlich ist, indern
(I) ein Gemisch aus (a1), (a2), (a3), (a4) und (a6) oder ein Gemisch aus Teilen der Komponenten (a1), (a2), (a3), (a4) und (a6) in einem organischen Lösemittel polymerisiert wird.
(II) nachdem mindestens 60 Gew.-% des aus (a1), (a2), (a3), (a4) und ggf. (a6) bestehenden Gemisches zugegeben worden sind, (a5) und der gegebenenfalls vorhandene Rest der Komponenten (a1), (a2), (a3), (a4) und (a6) zugegeben werden und weiter polymerisiert wird und
(III) nach Beendigung der Polymerisation das erhaltende Polyacrylatharz Zumindest teilweise neutralisiert und in Wasser dispergiert wird.

4. Waßriges Beschiehtungsmittel nach Anspruch 3, **dadurch gekennzeichnet, daß** die Stufen (I) und (II) bei einer Temperatur von 80 bis 160°C durchgetührt worden sind und daß die Stute (I) 1 bis 8 Stunden dauert und die Zugabe der Mischung aus (a5) und dem ggf. vorhandenen Rest der Komponenten (a1), (a2), (a3), (a4), und (a6) innerhalb von 20 bis 120 Minuten erfolgt.

5. Wäßriges Beschichtungsmittel nach einem der Ansprüche 1 bis 4, **dacurch gekennzeichnet, daß** die Komponente (a2) als Monomer Trimethylolpropanmonoallylether enthält und/oder daß als Komponente (a3) ein oder mehrere Vinylester von in α-Stellung verzweigten, gesättigten aliphatischen Monocarbonsäuren mit 9 bis 11 C-Atomen eingesetzt worden sind und/oder daß als Komponente (a4) das Umsetzungsprodukt von Acryl-und/oder Methacrylsäure mit dem Glycidylester der Versaticsäure oder anstelle das Umsetzungsproduktes eine äquivalente Menge Acryl- und/oder Methacrylsäure, die dann während oder nach der Polymerisationsreaktion mit dem Glycidylester der Versaticsäure umgesetzt wird, eingesetzt worden ist.

6. Wäßriges Beschichtungsmittel nach einem der Ansprüche 1 bis 5, **dadurch gekennzeichnet, daß** das wasserverdünnbara Polyacrylatharz (A) erhältlich ist aus
a1) 20 bis 60 Gew.-% der Komponente (a1),
a2) 10 bis 40 Gew.-% der Komponente (a2),
a3) 1 bis 25 Gaw.% der Komponente (a3),
a4) 1 bis 25 Gew.-% der Komponente (a4),
a5) 1 bis 15 Gew.-% der Komponente (a5) und
a6) 5 bis 30 Gew.-% der Komponente (a6),
wobei die Summe der Gewichtsanteile der Komponenten (at) bis (a6) jeweils 100 Gew.-% beträgt.

7. Wäßriges Beschichtungsmittel nach Anspruch 6, **dadurch gekennzeichnet, daß** das wasserverdünnbare Polyacrylatharz (A) erhältlich ist aus
a1) 30 bis 50 Gew.-% der Komponente (a1),
a2) 15 bis 35 Gew-% der Komponente (a2),
a3) 5 bis 15 Gew.-% der Komponente (a3),
a4) 5 bis 15 Gew.-% der Komponente (a4),
a5) 2 bis 8 Gew.-% der Komponente (a5) und
a6) 10 bis 20 Gew-% der Komponente (a6),
wobei die Summe der Gewichtsanteile der Komponenten (a1) bis (a6) jeweils 100 Gew.-% beträgt.

8. Wäßriges Beschichtungsmittel nach einem der Ansprüche 1 bis 7, **dadurch gekennzeichnet, daß** es ein Verdikkungsmittel und/oder ein Netzmittel enthält.

9. Verfahren zur Herstellung eines wäßrigen Zweikomponenten-Polyurethan-Beschichtungsmittels, bei dem kurz vor der Applikation ein isocyanatgruppenhaltiges Vemetzungsmittel und eine ein wasserverdünnbares Polyacrylatharz enthaltende Komponente gemischt werden, **dadurch gekennzeichnet, daß** ein wäßriges Beschichtungsmittel nach einem der Ansprüche 1 bis 8 hergestellt wird.

10. Verfahren zur Herstellung eines mehrschichtigen, schützenden und/oder dekorativen Überzugs auf einer Substratfläche, bei dem
(1) eine pigmentierte Basisbeschichtungszusammensetzung auf die Substratoberfläche aufgebracht wird,
(2) aus der in Stute (1) aufgebrachten Zusammensetzung ein Polymerfilm gebildet wird,
(3) auf die so erhaltene Basisschicht eine ein wasserverdünnbares Polyacrylatharz als Bindemittel und ein Polyisocyanat als Vemetzungsmittel enthaltende transparente wäßrige Deckbeschichtungszusammensetzung aufgebracht wird und anschließend
(4) die Basisschicht zusammen mit der Deckschicht gehärtet wird.
**dadurch gekennzeichnet, daß** als Deckbeschichtungszusammensetzung ein wäßriges Beschichtungsmittel nach einem der Ansprüche 1 bis 8 aufgebracht wird.

11. Mit einer Mehrschichtlackierung beschichteter Gegenstand, **dadurch gekennzeichnet, daß** mindestens eine der Lackschichten unter Verwendung eines wäßrigen Beschichtungsmittels nach einem der Ansprüche 1 bis 8 hergestellt worden ist.

12. Verwendung der wäßrigen Beschichtungsmittel nach einem der Ansprüche 1 bis 8 im Bereich der Autoreparaturlackierung.

13. Verwendung von wasserverdünnbaren Polyacrylatharzen, die erhältlich sind, indem in einem organischen Lösemittel oder Lösemittelgemisch und in Gegenwart mindestens eines Polymerisationsinitiators
a1) ein von (a2), (a3), (a4) und (a6) verschiedener, mit (a2), (a3), (a4), (a5) und (a6) copolymerisierbarer, im wesentlichen carboxylgruppenfreier (Meth)acrylsäureester oder ein Gemisch aus solchen Monomeren.
a2) ein mit (a1), (a2), (a3), (a4), (a5) und (a6) copolymerisierbares, von (a4) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
a3) ein oder mehrere Vinylester von in α-Stellung verzweigten Monocarbonsäuren mit 5 bis 18 C-Atomen je Molekül und/oder
a4) mindestens ein Umsetzungsprodukt aus Acrylsäure und/oder Methacrylsäure mit dem Glycidylester einer in α-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in α-Stellung verzweigten Monocarbonsäure mit 5 bis 18 C-Atomen je Molekül umgeset zt wird,
a5) ein mindestens eine Carboxylgruppe pro Molekül tragendes, mit (a1), (a2), (a3), (a4), und (a6) copolymerisierbares, ethylenisch ungesättigtes Monomer oder ein Gemisch aus solchen Monomeren und
a6) eine Kombination von einem oder mehreren mit (a1), (a2), (a3), (a4) und (a5) copolymerisierbaren Polysiloxanmakromonomer en und mit (a1), (a2), (a3), (a4) und (a5) copolymerisierbaren, von (a1), (a2), (a3) und (a4) verschiedenen, im wesentlichen carboxylgruppenfreien, ethylenisch ungesättigten Monomeren oder eine Kombination von einem oder mehreren mit (a1), (a2), (a3), (a4) und (a5) copolymerisierbaren Polysiloxanmakromonomeren und einem Gemisch aus mit (a1), (a2), (a3), (a4) und (a5) copolymerisierbaren, von (a1), (a2), (a3) und (a4) verschiedenen, im wesentlichen carboxylgruppenfreien, ethylenisch ungesättigten Monomeren
polymerisiert werden und nach Beendigung der Polymerisation das erhaltene Polyacrylatharz zumindest teilweise neutralisiert und in Wasser dispergiert wird, wobei (a1), (a2), (a3), (a4), (a5) und (a6) in Art und Menge so ausgewählt werden, daß das Polyacrylatharz (A) die gewünschte OH-Zahl, Säurezahl und Glasübergangstemperatur aufweist, in wäßrigen Beschichtungsmitteln.

## Claims

1. Aqueous two-component polyurethane coating composition comprising
A) a water-dilutable polyacrylate resin (A) which contains hydroxyl and carboxylate groups and has an OH number of from 40 to 200 mg of KOH/g, an acid number of from 20 to 100 mg of KOH/g and a glass transition temperature of from -40°C to +60°C, and
B) a polyisocyanate component (B) as crosslinking agent,
**characterized in that** the water-dilutable polyacrylate resin (A) is obtainable by polymerizing, in an organic solvent or solvent mixture and in the presence of at least one polymerization initiator,
a1) a (meth)acrylic ester which is different from (a2), (a3), (a4) and (a6), is copolymerizable with (a2), (a3), (a4), (a5) and (a6) and is substantially free of carboxyl groups, or a mixture of such monomers,
a2) an ethylenically unsaturated monomer which is copolymerizable with (a1), (a2), (a3), (a4), (a5) and (a6), is different from (a4), carries at least one hydroxyl group per molecule and is essentially free of carboxyl groups, or a mixture of such monomers,
a3) one or more vinyl esters of α-branched monocarboxylic acids having 5 to 18 carbon atoms per molecule, and/or
a4) at least one reaction product of acrylic acid and/or methacrylic acid with the glycidyl ester of an α-branched monocarboxylic acid having 5 to 18 carbon atoms per molecule or, instead of the reaction product, an equivalent quantity of acrylic and/or methacrylic acid which then, during or after the polymerization reaction, is reacted with the glycidyl ester of an α-branched monocarboxylic acid having 5 to 18 carbon atoms per molecule,
a5) an ethylenically unsaturated monomer which carries at least one carboxyl group per molecule and is copolymerizable with (a1), (a2), (a3), (a4) and (a6), or a mixture of such monomers, and
(a6) a combination of one or more polysiloxane macromonomers which are copolymerizable with (a1), (a2), (a3), (a4) and (a5) and ethylenically unsaturated monomers which are copolymerizable with (a1), (a2), (a3), (a4) and (a5), are different from (a1), (a2), (a3) and (a4) and are essentially free of carboxyl groups, or a combination of one or more polysiloxane macromonomers which are copolymerizable with (a1), (a2), (a3), (a4) and (a5) and a mixture of ethylenically unsaturated monomers which are copolymerizable with (a1), (a2), (a3), (a4) and (a5), are different from (a1), (a2), (a3) and (a4) and are essentially free of carboxyl groups,
and after the polymerization at least partially neutralizing the resulting polyacrylate resin and dispersing it in water, the nature and quantity of (a1), (a2), (a3), (a4), (a5) and (a6) being selected such that the polyacrylate resin (A) has the desired OH number, acid number and glass transition temperature.

2. Aqueous coating composition according to claim 1, **characterized in that** the water-dilutable polyacrylate resin (A) has an OH number of from 60 to 140 mg of KOH/g and/or an acid number of from 25 to 50 mg of KOH/g and/or a glass transition temperature of from -20°C to +40°C.

3. Aqueous coating composition according to claim 1 or claim 2, **characterized in that** the water-dilutable polyacrylate resin (A) is obtainable by
(I) polymerizing a mixture of (a1) , (a2), (a3), (a4) and (a6) or a mixture of portions of components (a1), (a2), (a3), (a4) and (a6) in an organic solvent,
(II) after at least 60 % by weight of the mixture consisting of (a1), (a2), (a3), (a4) and, if desired, (a6) have been added, adding (a5) and any remaining amounts of components (a1), (a2), (a3), (a4) and (a6), and continuing polymerization, and
(III) after the end of polymerization, at least partially neutralizing the resulting polyacrylate resin and dispersing it in water.

4. Aqueous coating composition according to claim 3, **characterized in that** stages (I) and (II) have been carried out at a temperature of from 80 to 160°C and **in that** stage (I) lasts for from 1 to 8 hours and the addition of the mixture of (a5) and any remaining quantity of components (a1), (a2), (a3), (a4) and (a6) is effected over the course of from 20 to 120 minutes.

5. Aqueous coating composition according to one of claims 1 to 4, **characterized in that** component (a2) contains trimethylol propane monoallyl ether as monomer and/or **in that**, as component (a3), one or more vinyl esters of α-branched, saturated aliphatic monocarboxylic acids having 9 to 11 carbon atoms have been employed and/or **in that**, as component (a4), the reaction product of acrylic and/or methacrylic acid with the glycidyl ester of Versatic acid or, instead of the reaction product, an equivalent quantity of acrylic and/or methacrylic acid which is then reacted, during or after the polymerization reaction, with the glycidyl ester of Versatic acid, has been employed.

6. Aqueous coating composition according to one of claims 1 to 5 **characterized in that** the water-dilutable polyacrylate resin (A) is obtainable from
a1) from 20 to 60 % by weight of component (a1)
a2) from 10 to 40 % by weight of component (a2)
a3) from 1 to 25 % by weight of component (a3)
a4) from 1 to 25 % by weight of component (a4)
a5) from 1 to 15 % by weight of component (a5) and
a6) from 5 to 30 % by weight of component (a6),
the sum of the proportions by weight of components (a1) to (a6) being in each case 100 % by weight.

7. Aqueous coating composition according to claim 6 **characterized in that** the water-dilutable polyacrylate resin (A) is obtainable from
a1) from 30 to 50 % by weight of component (a1)
a2) from 15 to 35 % by weight of component (a2)
a3) from 5 to 15 % by weight of component (a3)
a4) from 5 to 15 % by weight of component (a4)
a5) from 2 to 8 % by weight of component (a5) and
a6) from 10 to 20 % by weight of component (a6),
the sum of the proportions by weight of components (a1) to (a6) being in each case 100 % by weight.

8. Aqueous coating composition according to one of claims 1 to 7, **characterized in that** it contains a thickener and/or a wetting agent.

9. Process for the preparation of an aqueous two-component polyurethane coating composition, in which shortly before application an isocyanate group-containing crosslinking agent and a component containing a water-dilutable polyacrylate resin are mixed, **characterized in that** an aqueous coating composition according to one of claims 1 to 8 is prepared.

10. Process for the production of a multicoat protective and/or decorative coating on a substrate area, in which
(1) a pigmented basecoat composition is applied to the substrate surface,
(2) a polymer film is formed from the composition applied in stage (1),
(3) a transparent aqueous topcoat composition containing a water-dilutable polyacrylate resin as binder and a polyisocyanate as crosslinking agent is applied to the resulting basecoat, and subsequently
(4) the basecoat together with the topcoat is cured,
**characterized in that** the topcoat composition applied is an aqueous coating composition according to one of claims 1 to 8.

11. Article coated with a multicoat finish, **characterized in that** at least one of the coats has been produced using an aqueous coating composition according to one of claims 1 to 8.

12. Use of the aqueous coating compositions according to one of claims 1 to 8 in the area of automotive refinishing.

13. Use of water-dilutable polyacrylate resins which are obtainable by polymerizing, in an organic solvent or solvent mixture and in the presence of at least one polymerization initiator,
a1) a (meth)acrylic ester which is different from (a2), (a3), (a4) and (a6), is copolymerizable with (a2), (a3), (a4), (a5) and (a6) and is substantially free of carboxyl groups, or a mixture of such monomers,
a2) an ethylenically unsaturated monomer which is copolymerizable with (a1), (a2), (a3), (a4), (a5) and (a6), is different from (a4), carries at least one hydroxyl group per molecule and is essentially free of carboxyl groups, or a mixture of such monomers,
a3) one or more vinyl esters of -branched monocarboxylic acids having 5 to 18 carbon atoms per molecule, and/or
a4) at least one reaction product of acrylic acid and/or methacrylic acid with the glycidyl ester of an -branched monocarboxylic acid having 5 to 18 carbon atoms per molecule or, instead of the reaction product, an equivalent quantity of acrylic and/or methacrylic acid which then, during or after the polymerization reaction, is reacted with the glycidyl ester of an -branched monocarboxylic acid having 5 to 18 carbon atoms per molecule,
a5) an ethylenically unsaturated monomer which carries at least one carboxyl group per molecule and is copolymerizable with (a1), (a2), (a3), (a4) and (a6), or a mixture of such monomers, and
a6) a combination of one or more polysiloxane macromonomers which are copolymerizable with (a1), (a2), (a3), (a4) and (a5), are different from (a1), (a2), (a3) and (a4) and are essentially free of carboxyl groups, or a combination of one or more polysiloxane macromonomers which are copolymerizable with unsaturated monomers which are copolymerizable with (a1), (a2), (a3) and (a4) and are essentially free of carboxyl groups,
and after the polymerization at least partially neutralizing the resulting polyacrylate resin and dispersing it in water, the nature and quantity of (a1), (a2), (a3), (a4), (a5) and (a6) being selected such that the polyacrylate resin (A) has the desired OH number, acid number and glass transition temperature, in aqueous coating compositions.

## Revendications

1. Composition de revêtement aqueuse bicomposant en polyuréthane, comprenant
A) une résine de polyacrylate (A) diluable à l'eau, renfermant des groupes hydroxy et carboxylate ayant un indice OH de 40 à 200 mg KOH/g, un indice d'acide de 20 à 100 mg KOH/g et une température de transition vitreuse de -40°C à +60°C, et
B) un composant polyisocyanate (B) en tant qu'agent de réticulation,
**caractérisée en ce que** la résine de polyacrylate (A) diluable à l'eau peut être obtenue en polymérisant, dans un solvant ou un mélange de solvants organiques et en présence d'au moins un amorceur de polymérisation,
a1) un ester (méth)acrylique essentiellement dépourvu de groupe carboxy, copolymérisable avec (a2), (a3), (a4), (a5) et (a6) et différent de (a2), (a3), (a4) et (a6), ou un mélange de tels monomères,
a2) un monomère éthyléniquement insaturé, copolymérisable avec (a1), (a2), (a3), (a4), (a5) et (a6) et différent de (a4), qui renferme au moins un groupe hydroxy par molécule et est essentiellement dépourvu de groupe carboxy, ou un mélange de tels monomères,
a3) un ou plusieurs esters vinyliques d'acides monocarboxyliques ramifiés en position α ayant de 5 à 18 atomes de carbone par molécule, et/ou
a4) au moins un produit de réaction de l'acide acrylique et/ou de l'acide méthacrylique avec l'ester glycidylique d'un acide monocarboxylique ramifié en position α ayant de 5 à 18 atomes de carbone par molécule, ou à la place du produit de réaction, une quantité équivalente d'acide acrylique et/ou d'acide méthacrylique, qui est alors mise à réagir, durant ou après la réaction de polymérisation, avec l'ester glycidylique d'un acide monocarboxylique ramifié en position α ayant de 5 à 18 atomes de carbone par molécule,
a5) un monomère éthyléniquement insaturé copolymérisable avec (a1), (a2), (a3), (a4) et (a6), renfermant au moins un groupe carboxy par molécule, ou un mélange de tels monomères, et
a6) une combinaison d'un ou de plusieurs macromonomères polysiloxane copolymérisables avec (a1), (a2), (a3), (a4) et (a5) et de monomères éthyléniquement insaturés essentiellement dépourvus de groupe carboxy, copolymérisables avec (a1), (a2), (a3), (a4) et (a5) et différents de (a1), (a2), (a3) et (a4), ou une combinaison d'un ou de plusieurs macromonomères polysiloxane copolymérisables avec (a1), (a2), (a3), (a4) et (a5) et d'un mélange de monomères éthyléniquement insaturés essentiellement dépourvus de groupe carboxy, copolymérisables avec (a1), (a2), (a3), (a4) et (a5) et différents de (a1), (a2), (a3) et (a4),
et après la fin de la polymérisation, en neutralisant au moins partiellement la résine de polyacrylate obtenue et en la dispersant dans de l'eau, la nature et la quantité de (a1), (a2), (a3), (a4), (a5) et (a6) étant choisies de telle sorte que la résine de polyacrylate (A) présente l'indice OH, l'indice d'acide et la température de transition vitreuse souhaités.

2. Composition de revêtement aqueuse selon la revendication 1, **caractérisée en ce que** la résine de polyacrylate (A) diluable à l'eau présente un indice OH de 60 à 140 mg KOH/g et/ou un indice d'acide de 25 à 50 mg KOH/g et/ou une température de transition vitreuse de -20°C à +40°C.

3. Composition de revêtement aqueuse selon la revendication 1 ou 2, **caractérisée en ce que** la résine de polyacrylate (A) diluable à l'eau peut être obtenue
(I) en polymérisant dans un solvant organique un mélange de (a1), (a2), (a3), (a4) et (a6) ou un mélange de parties des composants (a1), (a2), (a3), (a4) et (a6),
(II) en ajoutant (a5) et le reste éventuellement présent des composants (a1), (a2), (a3), (a4) et (a6) et en poursuivant la polymérisation, après avoir ajouté au moins 60% en poids du mélange constitué de (a1), (a2), (a3), (a4) et éventuellement (a6), et
(III) en neutralisant au moins partiellement, après la fin de la polymérisation, la résine de polyacrylate obtenue et en la dispersant dans de l'eau.

4. Composition de revêtement aqueuse selon la revendication 3 **caractérisée en ce que** les étapes (I) et (II) sont réalisées à une température de 80 à 160°C et **en ce que** l'étape (I) dure de 1 à 8 heures et l'addition du mélange de (a5) et du reste éventuellement présent des composants (a1), (a2), (a3), (a4) et (a6) est réalisée en l'espace de 20 à 120 minutes.

5. Composition de revêtement aqueuse selon l'une quelconque des revendications 1 à 4, **caractérisée en ce que** le composant (a2) comprend de l'éther monoallylique de triméthylolpropane en tant que monomère et/ou **en ce que** l'on a utilisé, en tant que composant (a3), un ou plusieurs esters vinyliques d'acides monocarboxyliques aliphatiques saturés ramifiés en position alpha, ayant de 9 à 11 atomes de carbone, et/ou **en ce que** l'on a utilisé, en tant que composant (a4), le produit de réaction de l'acide acrylique et/ou de l'acide méthacrylique avec l'ester glycidylique de l'acide versatique ou, au lieu du produit de réaction, une quantité équivalente d'acide acrylique et/ou d'acide méthacrylique, qui est alors mise à réagir avec l'ester glycidylique de l'acide versatique durant ou après la réaction de polymérisation.

6. Composition de revêtement aqueuse selon l'une quelconque des revendications 1 à 5, **caractérisée en ce que** la résine de polyacrylate (A) diluable à l'eau peut être obtenue à partir de
a1) de 20 à 60% en poids du composant (a1),
a2) 10 à 40% en poids du composant (a2),
a3) 1 à 25% en poids du composant (a3),
a4) 1 à 25% en poids du composant (a4),
a5) 1 à 15% en poids du composant (a5), et
a6) 5 à 30% en poids du composant (a6),
la somme des proportions pondérales des composants (a1) à (a6) étant dans chaque cas de 100% en poids.

7. Composition de revêtement aqueuse selon la revendication 6, **caractérisée en ce que** la résine de polyacrylate (A) diluable à l'eau peut être obtenue à partir de
a1) de 30 à 50% en poids du composant (a1),
a2) 15 à 35% en poids du composant (a2),
a3) 5 à 15% en poids du composant (a3),
a4) 5 à 15% en poids du composant (a4),
a5) 2 à 8% en poids du composant (a5), et
a6) 10 à 20% en poids du composant (a6),
la somme des proportions pondérales des composants (a1) à (a6) étant dans chaque cas de 100% en poids.

8. Composition de revêtement aqueuse selon l'une quelconque des revendications 1 à 7, **caractérisée en ce qu'**elle comprend un épaississant et/ou un agent mouillant.

9. Procédé de préparation d'une composition de revêtement aqueuse bicomposant en polyuréthane, dans lequel peu avant l'application, un agent de réticulation renfermant des groupes isocyanate et un composant comprenant une résine de polyacrylate diluable à l'eau, sont mélangés, **caractérisé en ce que** l'on prépare une composition de revêtement aqueuse selon l'une quelconque des revendications 1 à 8.

10. Procédé de production d'un revêtement multicouche protecteur et/ou décoratif sur un substrat, dans lequel
(1) on applique une composition de couche de fond pigmentée sur la surface du substrat,
(2) on forme un film polymère à partir de la composition appliquée à l'étape (1),
(3) on applique, sur la couche de fond ainsi obtenue, une composition de couche de finition aqueuse transparente comprenant une résine de polyacrylate diluable à l'eau en tant que liant et un polyisocyanate en tant qu'agent de réticulation, et ensuite
(4) on durcit conjointement la couche de fond et la couche de finition,
**caractérisé en ce que** l'on applique, en tant que composition de couche de finition, une composition de revêtement aqueuse selon l'une quelconque des revendications 1 à 8.

11. Article revêtu d'un revêtement multicouche, **caractérisé en ce qu'**au moins l'une des couches de peinture a été produite en utilisant une composition de revêtement aqueuse selon l'une quelconque des revendications 1 à 8.

12. Utilisation des compositions de revêtements aqueuses selon l'une quelconque des revendications 1 à 8 dans le domaine des retouches d'automobiles.

13. Utilisation de résines de polyacrylates diluables à l'eau qui peuvent être obtenues en polymérisant, dans un solvant ou un mélange de solvants organiques et en présence d'au moins un amorceur de polymérisation,
a1) un ester (méth)acrylique essentiellement dépourvu de groupe carboxy, copolymérisable avec (a2), (a3), (a4), (a5) et (a6) et différent de (a2), (a3), (a4) et (a6), ou un mélange de tels monomères,
a2) un monomère éthyléniquement insaturé, copolymérisable avec (a1), (a2), (a3), (a4), (a5) et (a6) et différent de (a4), qui renferme au moins un groupe hydroxy par molécule et est essentiellement dépourvu de groupe carboxy, ou un mélange de tels monomères,
a3) un ou plusieurs esters vinyliques d'acides monocarboxyliques ramifiés en position α ayant de 5 à 18 atomes de carbone par molécule, et/ou
a4) au moins un produit de réaction de l'acide acrylique et/ou de l'acide méthacrylique avec l'ester glycidylique d'un acide monocarboxylique ramifié en position α ayant de 5 à 18 atomes de carbone par molécule, ou à la place du produit de réaction, une quantité équivalente d'acide acrylique et/ou d'acide méthacrylique, qui est alors mise à réagir, durant ou après la réaction de polymérisation, avec l'ester glycidylique d'un acide monocarboxylique ramifié en position α ayant de 5 à 18 atomes de carbone par molécule,
a5) un monomère éthyléniquement insaturé copolymérisable avec (a1), (a2), (a3), (a4) et (a6), renfermant au moins un groupe carboxy par molécule, ou un mélange de tels monomères, et
a6) une combinaison d'un ou de plusieurs macromonomères polysiloxane copolymérisables avec (a1), (a2), (a3), (a4) et (a5) et de monomères éthyléniquement insaturés essentiellement dépourvus de groupe carboxy, copolymérisables avec (a1), (a2), (a3), (a4) et (a5) et différents de (a1), (a2), (a3) et (a4), ou une combinaison d'un ou de plusieurs macromonomères polysiloxane copolymérisables avec (a1), (a2), (a3), (a4) et (a5) et d'un mélange de monomères éthyléniquement insaturés essentiellement dépourvus de groupe carboxy, copolymérisables avec (a1), (a2), (a3), (a4) et (a5) et différents de (a1), (a2), (a3) et (a4),
et après la fin de la polymérisation, en neutralisant au moins partiellement la résine de polyacrylate obtenue et en la dispersant dans de l'eau, la nature et la quantité de (a1), (a2), (a3), (a4), (a5) et (a6) étant choisies de telle sorte que la résine de polyacrylate (A) présente l'indice OH, l'indice d'acide et la température de transition vitreuse souhaités, dans des compositions de revêtements aqueuses.
